# EUROPEAN PATENT APPLICATION

(11) **EP 1 602 464 A1**
(43) Date of publication of application: **07.12.2005**
(21) Application number: 04711749.4
(22) Date of filing: 17.02.2004
(51) Int. Cl.: B29C 45/16

(54) **DOUBLE-SIDE IN-MOLD TRANSFER MOLDING METHOD**

(30) Priority: 18.02.2003 JP 2003039759
(71) Applicant: Yoshida Kogyo Co., Ltd, Sumida-ku, Tokyo 131-0043 (JP)
(72) Inventor: YUHARA, Yukitomo, c/o Yoshida Kogyo Co., Ltd., Tokyo 131-0043 (JP)
(74) Representative: Cabinet HERRBURGER
(86) International application number: PCT/JP2004/001722
(87) International publication number: WO 2004/073952

(57) **Abrégé**

L'invention a pour but de fournir un procédé de fabrication des produits moulés par l'injection dans un moule (IMD : In Mold Decoration), pour transférer des décors sur les deux côtés de produits moulés.

Ce procédé qui n'a pas besoin de perforer le film, permet d'éviter le mélange des déchets de découpage dans les produits moulés ainsi que la création des creux sur la surface des produits, pour améliorer le rendement de ces produits.

L'invention propose un procédé de produits moulés par l'injection dans un moule (IMD) pour transférer des décors sur les deux côtés de produits moulés, dans lequel un premier film continu 7 et un deuxième film continu 14 passent entre un moule fixe 3 et un moule mobile 4 respectivement dotés de cavités 3b, 4b pour le moulage des produits moulés 21, **caractérisé en ce que** le moule fixe 3 et le moule mobile 4 ont un chemin 4a pour introduire la résine dans les cavités 3b,4b lors du serrage des moules, le chemin d'introduction étant formé dans une région de passage du deuxième film continu 14 et dans le sens qui coupe le sens d'avance du premier film continu 7, et en ce que le procédé comprend une étape dans laquelle le premier film continu 7 passe du côté du moule fixe 3 et le deuxième film continu 14 passe du côté du moule mobile 4 d'une manière à couper le premier film continu 7, pour que le deuxième film 14 se face à la buse d'injection 3a de la résine formée sur le moule fixe 3, ainsi qu'une étape dans laquelle après le serrage du moule mobile 4 et du moule fixe 3, la résine est injectée sur le deuxième film continu 14 à travers la buse d'injection 3a, et coulée entre le premier film continu 7 et le deuxième film continu 14 à partir de la face latérale d'extrémité du premier film continu 7 par l'intermédiaire du chemin d'introduction 4a pour la mise en forme des produits moulés 21.

## Description

### DOMAINE TECHNIQUE DE L'INVENTION

La présente invention se rapporte à un procédé de fabrication des produits moulés par injection dans un moule (IMD : In Mold Decoration), dans lequel l'impression par transfert s'effectue sur les deux côtés des produits.

### TECHNIQUE ANTERIEURE

En général, il existe de divers procédés de fabrication de produits moulés pour transférer des décors, dans lesquels le moulage et l'impression par transfert se font simultanément. On connaît notamment par le document JP62-227613, un procédé pour fabriquer les produits moulés sur lesquels le décor est transféré des deux côtés, ce procédé comprenant un mécanisme perforateur de films.

Dans ce procédé de fabrication de produits moulés sur lesquels le décor est transféré des deux côtés, le film est fourni par le côté d'un moule fixe en étant mis en position, et percé d'un trou par le mécanisme perforateur du film, qui est prévu sur le côté du moule fixe. Ensuite, par l'injection de résine à travers ce trou, on peut obtenir d'une manière simple les produits moulés qui sont imprimés des deux côtés ayant différentes formes.

Cependant, le procédé ci-dessus de fabrication de produits moulés et imprimés des deux côtés a besoin de perforer le film, les déchets de découpage qui génèrent au moment de l'opération de perforation, pouvant résider dans la cavité du moule, mélanger dans les produits moulés transparents, se coller au moule et former certains creux dans la surface de produits moulés, on se heurte alors à un problème de baisse des rendements de tels produits.

### EXPOSE DE L'INVENTION

Pour remédier à ces inconvénients, l'invention a pour but de fournir un procédé de fabrication des produits moulés par l'injection dans un moule (IMD), pour transférer des décors sur les deux côtés des produits, ce procédé n'ayant pas besoin de perforer le film, permet d'éviter le mélange des déchets de découpage aux produits moulés ainsi que la création des creux dans la surface des produits, pour améliorer le rendement des produits moulés.

A cet effet, l'invention propose un procédé de fabrication des produits moulés par l'injection dans un moule (IMD), pour transférer des décors sur les deux côtés des produits, dans lequel un premier film continu et un deuxième film continu passent entre un moule fixe et un moule mobile dotés respectivement d'une cavité pour la mise en forme des produits moulés, caractérisé en ce que le moule fixe et le moule mobile ont un chemin pour introduire la résine dans les cavités lors du serrage des moules, le chemin étant formé dans une région de passage du deuxième film continu et dans le sens qui coupe le sens d'avance du premier film continu, en ce que le procédé comprend une étape dans laquelle le premier film continu passe du côté du moule fixe et le deuxième film continu passe du côté du moule mobile d'une manière à couper le premier film continu, pour que le deuxième film se trouve face à la buse d'injection de la résine formée sur le moule fixe, ainsi qu'une étape dans laquelle après le serrage des moules mobile et fixe, la résine est injectée sur le deuxième film continu à travers la buse d'injection, et coulée entre le premier film continu et deuxième film continu à partir de la face latérale d'extrémité du premier film continu par l'intermédiaire du chemin d'introduction, pour la mise en forme des produits moulés.

Le procédé est également caractérisé en ce que des motifs d'impression formés sur le premier film continu et le deuxième film continu sont disposés l'un à côté de l'autre ou alignés l'un après l'autre dans la direction d'avance de film, l'introduction de la résine s'effectue sur ces deux motifs d'impression par le chemin d'introduction à travers une bifurcation, la bifurcation étant formée dans une région doublée par le premier film continu et le deuxième film continu. Grâce à cet agencement dans lequel la bifurcation est prévue dans la région doublée des premier film continu et deuxième film continu, il devient possible de ne former qu'un seul chemin d'introduction pour faire introduire la résine synthétique que le premier film continu reçoit, vers le deuxième film continu, avant la bifurcation, si bien que le taux de défectuosité des articles dont la résine synthétique ne peut pas traverser le deuxième film est diminué.

### DESCRIPTION SOMMAIRE DES DESSINS

- La figure 1 est une vue perspective d'un panneau de protection formé par le procédé de fabrication selon un mode de réalisation d'invention ;
- La figure 2 est une vue descriptive d'un moule fixe, d'un moule mobile et des films continus ;
- La figure 3 est une vue schématique de l'étape dans laquelle les films continus passent d'une manière successive respectivement dans le moule fixe et le moule mobile ;
- La figure 4 est une vue schématique de l'étape dans laquelle le moule fixe et le moule mobile se sont serrés et la résine est coulée pour la mise en forme des produits moulés ;
- La figure 5 est une vue schématique de l'étape dans laquelle le moule fixe et le moule mobile sont ouverts pour prélever les produits moulés ; et
- La figure 6 est une vue schématique qui montre une disposition du chemin d'introduction et des motifs d'impression.

### DESCRIPTION D'UN MODE DE REALISATION DE L'INVENTION

L'invention sera mieux comprise à la lecture de la description qui va suivre en référence aux dessins annexés, et qui se rapporte à un mode de réalisation d'un procédé de fabrication des produits moulés par l'injection dans un moule (IMD) selon l'invention, dans lequel l'impression par transfert s'effectue sur les deux côtés des produits.

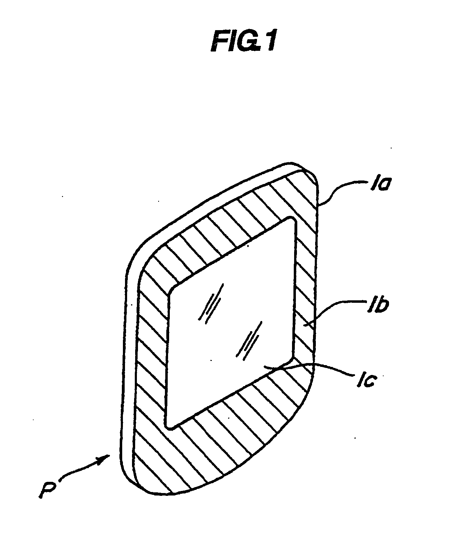

Sur la figure 1, on voit un exemple de produit moulé en résine avec décoration, fabriqué selon un mode de réalisation de l'invention. Ce produit moulé en résine avec décoration P est utilisé comme panneau de la fenêtre d'affichage des appareils électroniques tels que des téléphones portables. Ce produit moulé en résine avec décoration P sur la figure 1, est une platine en résine acrylique transparente 1a à la périphérie de laquelle un cadre 1b est imprimé ; il comprend en son milieu un espace 1c réservé à la fenêtre d'affichage transparente pour l'écran à cristaux liquides.

On expliquera maintenant le procédé de fabrication du produit moulé en résine avec décoration P selon un mode de réalisation de l'invention. Ce mode de réalisation est un exemple qui utilise des moules d'injection dans lequel 2 films continus se déroulent.

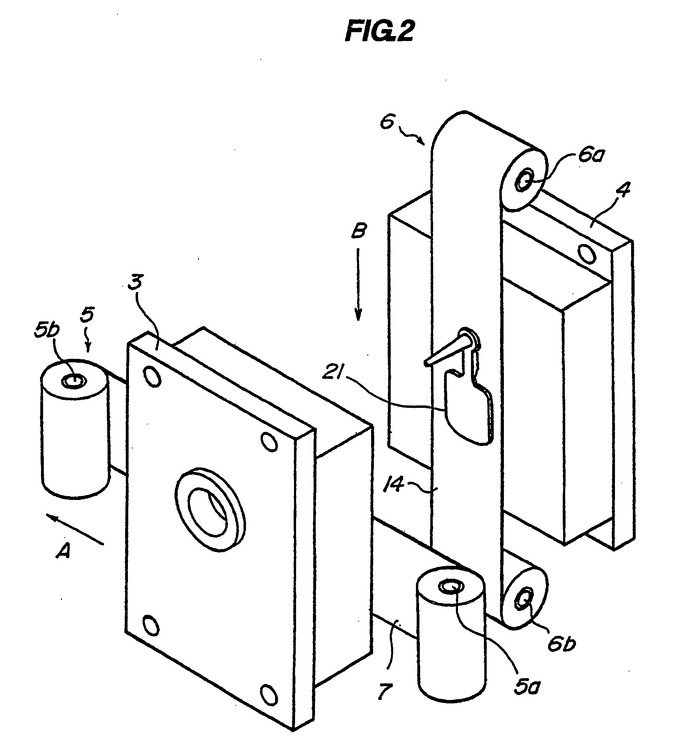

Comme illustré sur la figure 2, dans une première étape, un premier film continu 7 et un deuxième film continu 14 passent d'une manière successive entre le moule fixe 3 et le moule mobile 4 dans une direction orthogonale l'une à l'autre.

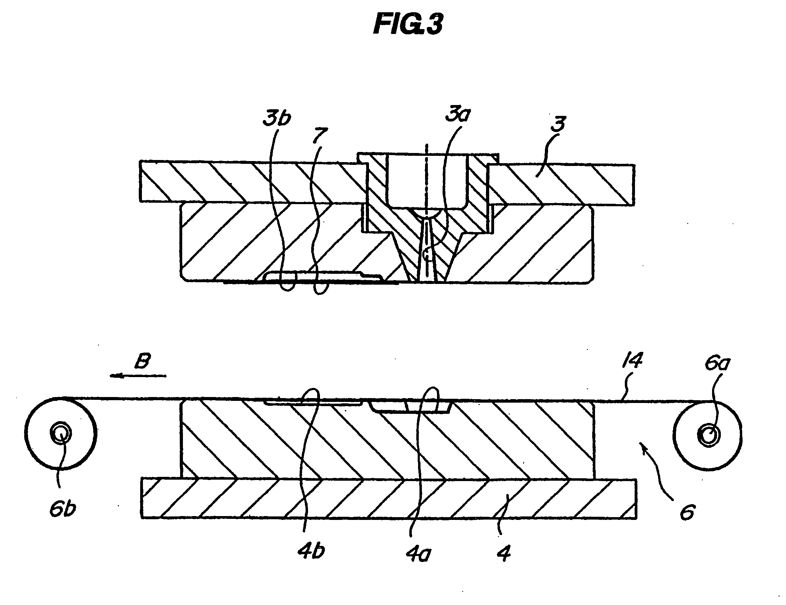

Comme illustré sur la figure 3, le moule fixe 3 comprend une buse d'injection 3a pour injecter la résine transparente et une cavité 3b. Le moule mobile 4 est muni d'une cavité 4b et d'un chemin d'introduction 4a qui communique avec cette cavité.

La buse d'injection 3a se situe hors de la région de passage du premier film continu 7 et dans une position en face à une extrémité du chemin d'introduction 4a lors du serrage du moule fixe 3 et du moule mobile 4 l'un par rapport à l'autre.

Le chemin d'introduction 4a de la résine dans les cavités 3b, 4b lors du serrage du moule fixe 3 et du moule mobile 4, est formé dans la région de passage du deuxième film 14 et dans une direction d'avance de ce deuxième film continu 14 (direction de la flèche B) ; cette direction est orthogonale à la direction d'avance du premier film continu 7 (direction de la flèche A).

Comme le montre la figure 2, un premier moyen d'enroulement 5 et un deuxième moyen d'enroulement 6 équipent respectivement le moule fixe 3 et le moule mobile 4. Chacun de ces moyens 5, 6 comprend des rouleaux de déroulement 5a, 6a et des rouleaux d'enroulement 5b, 6b, entre lesquels le film continu 7 et le film continu 14 sont tendus.

Le premier film continu 7 et deuxième film continu 14 sont maintenus enroulés respectivement sur les rouleaux de déroulement 5a, 6a ; leur extrémité passe entre le moule fixe 3 et le moule mobile 4 pour être enroulée sur les rouleaux d'enroulement 5b, 6b. C'est ainsi que toutes les dispositions nécessaires à la fabrication sont prises.

Le deuxième film continu 14 est disposé d'une manière à être seul face à la buse d'injection 3a. En d'autre terme, il est prévu que le premier film continu 7 est disposé seulement en face de la cavité 3b du côté du moule fixe pour que la face latérale d'extrémité de ce premier film continu 7 passe dans le chemin d'introduction 4a, tandis que le deuxième film continu 14 se trouve face au chemin d'introduction 4a et à la cavité 4b du coté du moule mobile. En mettant en action les moyens d'enroulement 5 et 6, le premier film continu 7 et le deuxième film continu 14 avancent par intermittence entre le moule fixe 3 et le moule mobile 4, afin que ces deux films continus soient orthogonaux l'un à l'autre. Cette manipulation d'avancée intermittente, est contrôlée de façon que les motifs d'impression concordent toujours avec la cavité 3b du moule fixe 3 et la cavité 4b du moule mobile 4.

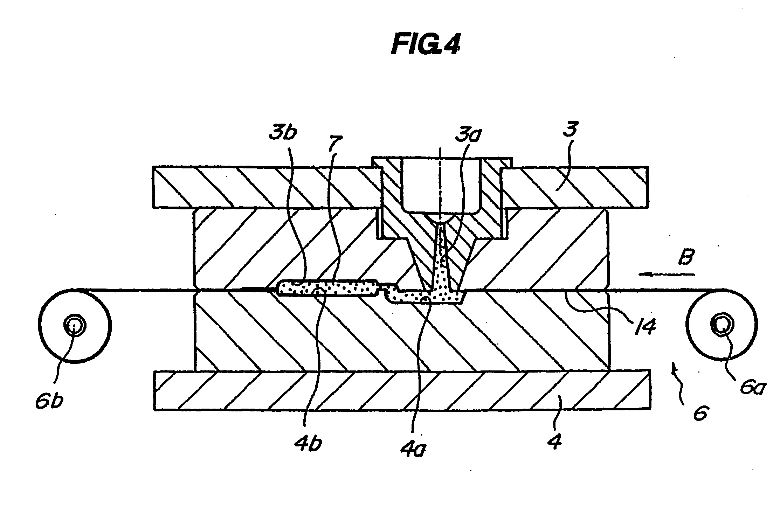

L'étape d'injection de la résine sera décrite ci-après comme illustré à la figure 4, on arrête chaque motif d'impression du premier film continu 7 et du deuxième film continu 14 devant les cavités 3b, 4b, avant de réunir le moule fixe 3 et le moule mobile 4 pour leur serrage.

Après le serrage du moule fixe 3 et mobile 4, la résine transparente est injectée contre le deuxième film continu 14 à travers la buse d'injection 3a. Cette résine transparente injectée s'avance vers le chemin d'introduction 4a en appliquant le deuxième film continu 14 contre le moule mobile 4 ; elle remplit ce chemin d'introduction 4a en appliquant, à partir de la face latérale d'extrémité de ce film 7, le premier film continu 7 contre le moule fixe 3, et elle presse le premier film continu 7 contre le moule fixe et le deuxième film continu 14 contre le moule mobile respectivement, pour que la résine remplisse les cavités 3b, 4b. C'est ainsi que le produit moulé 21 est mis en forme, pour se réunir au premier film continu 7 et au deuxième film continu 14.

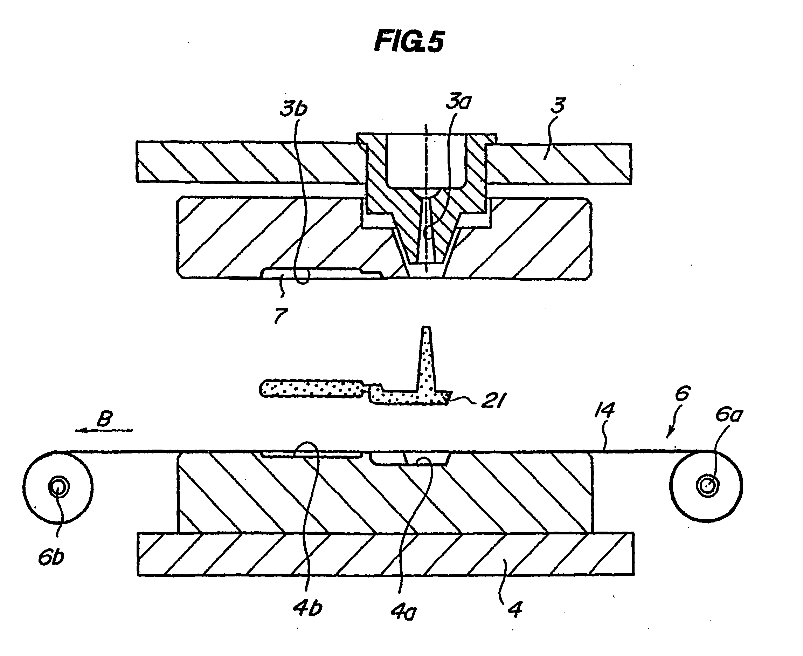

Comme le montre la figure 5, après le durcissement du produit moulé 21, on ouvre le moule fixe 3 et le moule mobile 4 pour prélever le produit moulé 21 sur lequel le décor est transféré depuis le premier film continu 7 et le deuxième film continu 14, en séparant ce produit 21 de chaque film continu 7, 14. Enfin, après le découpage et l'enlèvement d'une partie de la résine qui reste dans la buse d'injection, un panneau de protection P1 est formé.

Comme décrit précédemment, le premier film continu 7 passe du côté du moule fixe, tandis que le deuxième film continu 14 passe du côté du moule mobile de manière à couper le premier film continu 7, pour que le deuxième film 14 se trouve face à la buse d'injection 3a de la résine formée sur le moule fixe 3. Après le serrage du moule mobile 4 et du moule fixe 3, la résine est injectée sur le deuxième film continu 14 à travers la buse d'injection 3a, et coulée entre le premier film continu 7 et le deuxième film continu 14 à partir de la face latérale d'extrémité du premier film continu 7 par l'intermédiaire du chemin d'introduction 4a, pour former le produit moulé 21. Ainsi, il est possible de prévenir la pénétration de la résine transparente entre les films continus et les moules. Par ailleurs, ce procédé de mise en forme qui n'a pas besoin de perforation des films permet d'éviter le mélange des déchets de découpage dans le produit moulé 21 ainsi que la création des creux dans la surface du produit 21, et d'améliorer le rendement de fabrication du produit 21.

La buse d'injection 3a et le chemin d'introduction 4a sont formés dans la région de passage du deuxième film continu 14 et dans une direction d'avance de ce deuxième film continu 14 (direction de la flèche B : voir la figure 2), cette direction étant orthogonale à la direction d'avance du premier film continu 7 (direction de la flèche A : voir aussi la figure 2). Cette buse d'injection 3a se situe hors de la région de passage du premier film continu 7 et dans une position opposée à une extrémité du chemin d'introduction 4a lorsque le moule fixe 3 et le moule mobile 4 sont joints et serrés l'un par rapport à l'autre. Dans ces conditions, l'invention n'est pas limitée au mode de réalisation décrit et représenté aux dessins annexés.

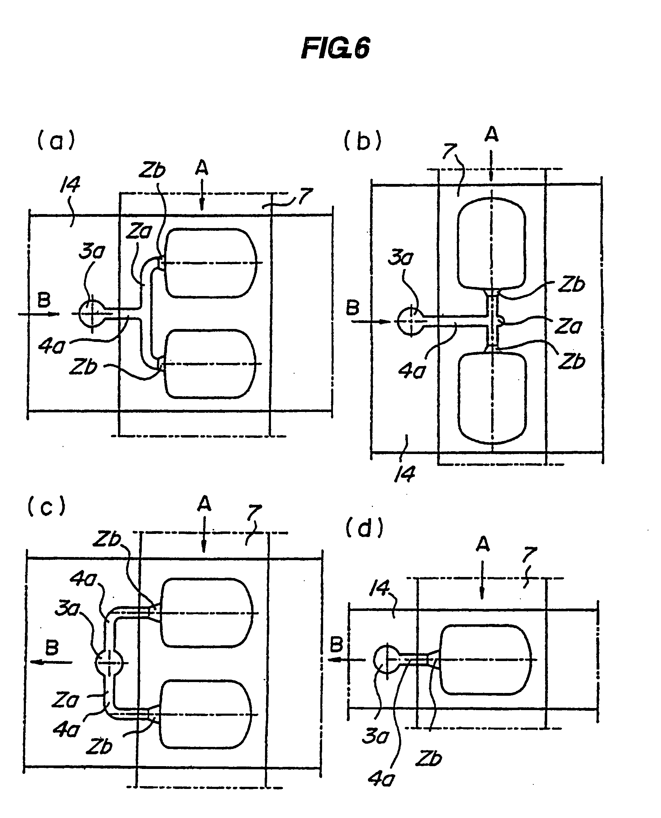

Par exemple, comme le montre la figure 6(a), les deux motifs d'impression sont disposés côte à côte dans la direction d'avance du premier film continu 7 (dans la direction de la flèche A) d'une manière à parvenir à deux motifs d'impression par un chemin d'introduction 4a ; une bifurcation Za de ce chemin d'introduction 4a peut être formée dans la région du premier film continu 7. Grâce à cet agencement dans lequel la bifurcation est prévue dans la région doublée ou superposée du premier film continu et le deuxième film continu, il suffit d'un chemin d'introduction pour envoyer la résine synthétique que le premier film continu reçoit, vers le deuxième film continu avant la bifurcation, ce qui permet de réduire le taux de défectuosité des articles dont la résine synthétique ne peut pas traverser le deuxième film.

Comme le montre la figure 6(b), les deux motifs d'impression sont alignés l'un après l'autre dans la direction d'avance du premier film continu 7 (dans la direction de la flèche A) de façon que les parties de liaison Zb avec le chemin de l'introduction 4a soient disposées l'une en face de l'autre pour parvenir à deux motifs d'impression par un seul chemin d'introduction 4a, une bifurcation Za de ce chemin d'introduction 4a peut être prévue dans la région du premier film continu 7 entre les deux motifs d'impression.

Comme le montre la figure 6(c), les deux motifs d'impression sont disposés côte à côte dans la direction d'avance du premier film continu 7 (dans la direction de la flèche A) pour parvenir à deux motifs d'impression par un seul chemin d'introduction 4a, mais une bifurcation Za de ce chemin d'introduction 4a peut être formée dans ce cas hors de la région du premier film continu 7.

Finalement comme le montre la figure 6(d), le motif d'impression peut être disposé dans la direction d'avance du deuxième film continu 14 (dans la direction de la flèche B), pour former un chemin d'introduction 4a tout droit.

Dans ce qui précède, le premier film continu passe du côté du moule fixe, tandis que le deuxième film continu passe du côté du moule mobile d'une manière à couper le premier film continu, afin que le deuxième film continu se trouve face à la buse d'injection de la résine formée sur le moule fixe, et ensuite, après le serrage du moule mobile et moule fixe, la résine est injectée sur le deuxième film continu par la buse d'injection, et coulée entre le premier film continu et deuxième film continu à partir de la face latérale d'extrémité du premier film continu à travers le chemin d'introduction. Ainsi, il est possible de prévenir la pénétration de la résine transparente entre les films continus et les moules. Ce procédé de mise en forme qui n'a pas besoin de perforation des films, permet d'éviter le mélange des déchets de découpage dans les produits moulés ainsi que la création des creux sur la surface de ces produits, pour améliorer le rendement des produits moulés.

## Revendications

1. Le procédé de fabrication des produits moulés par l'injection dans un moule (IMD : In Mold Decoration) pour transférer des décors sur les deux côtés de produits moulés, dans lequel un premier film continu et un deuxième film continu passent entre un moule fixe et un moule mobile dotés respectivement d'une cavité pour le moulage des produits moulés,
**caractérisé en ce que**
le moule fixe et le moule mobile ont un chemin pour introduire la résine dans la cavité lors du serrage des moules, le chemin étant formé dans une région de passage du deuxième film continu et dans le sens qui coupe le sens d'avance du premier film continu, et **en ce que**
le procédé comprend une étape dans laquelle le premier film continu passe du côté du moule fixe et le deuxième film continu passe du côté du moule mobile d'une manière à couper le premier film continu, pour que le deuxième film se trouve face à la buse d'injection de la résine formée sur le moule fixe, ainsi qu'
une étape dans laquelle après le serrage du moule mobile et du moule fixe, la résine est injectée sur le deuxième film continu à travers la buse d'injection, et coulée entre le premier film continu et le deuxième film continu à partir de la face latérale du premier film continu par l'intermédiaire du chemin d'introduction pour la mise en forme des produits moulés.

2. Le procédé de fabrication des produits moulés par l'injection dans un moule (IMD) pour transférer des décors sur les deux côtés de produits moulés selon la revendication 1,
**caractérisé en ce que**
des motifs d'impression formés sur le premier film et le deuxième film continus sont disposés l'un à côté de l'autre ou alignés l'un après l'autre dans la direction d'avance de film, l'introduction de la résine s'effectue sur ces deux motifs d'impression par le chemin d'introduction à travers une bifurcation, la bifurcation étant formée dans une région doublée par le premier film et le deuxième film.
